# DEMANDE DE BREVET EUROPEEN

(11) **EP 4 804 100 A1**
(43) Date de publication de la demande: **09.09.2026**
(21) Numéro de dépôt: 26162580.0
(22) Date de dépôt: 05.03.2026
(51) Int. Cl.: G06Q 20/18, G06Q 20/20, G07G 1/00

(54) **MÉTHODES ET SYSTÈMES DE SURVEILLANCE DES PROCÉDURES D'ENCAISSEMENT**

(30) Priorité: 06.03.2025 FR 2502283
(71) Demandeur: Afraite-Seugnet, Mehdi, 75003 Paris (FR)
(72) Inventeur: Afraite-Seugnet, Mehdi, 75003 Paris (FR)
(74) Mandataire: Nasr, Abdelmottaleb

(57) **Abrégé**

Système (2) de surveillance destiné à équiper une borne (1) d'encaissement intégrant un dispositif (13) d'affichage configuré pour afficher une information relative à un article (3) à encaisser, ce système (2) comprenant
- un capteur (21) d'image configuré pour l'acquisition d'une image dudit article (3);
- un module (22) de traitement configuré pour déterminer, dans ladite image, un article candidat correspondant audit article (3) à encaisser;
- un dispositif (23) de capture configuré pour récupérer en temps réel des signaux d'affichage destinés au dispositif (13) d'affichage et convertir ces signaux en un contenu au format prédéfini ;
le module de traitement étant, en outre, configuré pour vérifier la présence ou l'absence, dans ledit contenu, d'une information relative à l'article candidat.

## Description

La présente invention a trait aux systèmes d'encaissement, et plus particulièrement aux bornes d'encaissement automatique. Plus précisément, la présente invention concerne les méthodes et systèmes de surveillance destinés à équiper une borne d'encaissement automatique intégrant un dispositif d'affichage configuré pour afficher une information relative à un article à encaisser.

On entend par bornes d'encaissement automatique les dispositifs ou terminaux, couramment appelés caisses en libre-service, caisses automatiques ou encore, en anglais, « self-checkout », généralement disposés à une sortie d'un point de vente en libre-service permettant au client d'enregistrer lui-même ses achats (réaliser lui-même les opérations de la procédure d'encaissement).

Ces bornes d'encaissement automatique, bien qu'elles offrent de nombreux avantages, tels que la réduction du temps d'attente pour les clients et la diminution des coûts de main-d'oeuvre pour le point de vente, sont souvent sujettes à des agissements frauduleux appelés « démarques inconnues ». Le point de vente subit de ce fait un manque à gagner.

Plus généralement, les bornes d'encaissement automatique posent de nouveaux défis en matière de contrôle des démarques inconnues. Ces problèmes peuvent survenir
- de manière intentionnelle, par des actes délibérés de clients malveillants, par exemple via un changement ou une substitution volontaire du code à barres ou de l'étiquette d'un article par une étiquette indiquant un prix inférieur, le non-enregistrement d'un article, ou encore en quittant la borne d'encaissement automatique sans payer, ou
- de façon non intentionnelle, par exemple en raison d'erreurs humaines telles qu'une erreur d'enregistrement, comme la présentation d'un mauvais code à barres lorsque l'article en possède plusieurs (par exemple, un code à barres pour le pack et un autre pour un élément du pack), ou un oubli d'enregistrer un article.

Une surveillance humaine engendre des coûts additionnels, qui pourraient annuler une partie des économies espérées grâce à l'automatisation. En outre, avec la multiplication des caisses automatiques, il est souvent difficile de pouvoir superviser simultanément plusieurs clients à des stades différents de la procédure d'encaissement, augmentant le risque que des vols passent inaperçus. La démarque inconnue est encore facilitée lorsque le client est en connivence avec la personne supervisant les bornes d'encaissement automatique.

Le recours accru à la multiplication des caméras de surveillance présente plusieurs inconvénients. En plus d'être couteux et techniquement complexe à gérer, un trop grand nombre de caméras peut être perçu négativement par les clients honnêtes. Cette impression de surveillance excessive risque de nuire à leur expérience d'achat, en générant un sentiment d'inconfort ou de méfiance, ce qui peut à terme affecter leur fidélité au point de vente.

Un objet de la présente invention est de remédier aux inconvénients précités.

Un autre objet de la présente invention est de prévenir efficacement la démarque inconnue et les erreurs involontaires, sans impacter l'expérience d'achat du client ni le logiciel d'encaissement déjà en place.

Un autre objet de la présente invention est d'assurer une surveillance complète de la procédure d'encaissement, en garantissant que tous les articles à encaisser soient correctement enregistrés et payés, sans omission ni erreur.

A cet effet, il est proposé, en premier lieu, un système de surveillance destiné à équiper une borne d'encaissement intégrant un dispositif d'affichage configuré pour afficher une information relative à un article à encaisser, ce système comprenant
- un capteur d'image configuré pour acquérir une image dudit article;
- un module de traitement configuré pour déterminer, dans ladite image, un article candidat correspondant audit article à encaisser;
- un dispositif de capture configuré pour récupérer en temps réel des signaux d'affichage destinés au dispositif d'affichage et convertir ces signaux en un contenu au format prédéfini ; le module de traitement étant, en outre, configuré pour vérifier la présence ou l'absence, dans ledit contenu, d'une information relative à l'article candidat.

Diverses caractéristiques supplémentaires peuvent être prévues, seules ou en combinaison :
- le dispositif de capture comprend un répartiteur permettant de dupliquer les signaux d'affichage destinés au dispositif d'affichage ;
- le module de traitement est configuré pour vérifier la présence ou l'absence d'une information relative à l'article candidat dans une partie dudit contenu ;
- le module de traitement est, en outre, configuré pour extraire un texte dudit contenu, la présence ou l'absence de ladite information étant vérifiée dans le texte extrait ;
- le module de traitement utilise, pour déterminer l'article candidat, un ou plusieurs attributs de l'article différents d'un code à barres ;
- le système de surveillance comprend, en outre, un capteur de son configuré pour capturer un son prédéfini émis par la borne d'encaissement;
- le module de traitement est, en outre, configuré pour déterminer, à partir de ladite image et dudit contenu, une séquence d'évènements survenant au cours d'une procédure d'encaissement et pour générer un message lorsque ladite séquence d'évènements s'écarte d'une séquence prédéfinie d'évènements.

**Il** est proposé, en deuxième lieu, une méthode de surveillance d'une procédure d'encaissement sur une borne d'encaissement intégrant un dispositif d'affichage configuré pour afficher une information relative à un article à encaisser, cette méthode comprenant les étapes suivantes
- acquisition au moyen d'un capteur d'image d'une image dudit article ;
- détermination, au moins à partir de l'image acquise, d'un article candidat correspondant audit article à encaisser;
- récupération en temps réel au moyen d'un dispositif de capture des signaux d'affichage destinés au dispositif d'affichage et de conversion de ces signaux en un contenu au format prédéfini ;
- vérification de la présence ou de l'absence dans ledit contenu d'une information relative à l'article candidat.

Diverses caractéristiques supplémentaires peuvent être prévues, seules ou en combinaison :
- la méthode de surveillance comprend, en outre, une étape d'extraction d'un texte du contenu des signaux d'affichage, la présence ou l'absence de ladite information étant vérifiée dans le texte extrait ;
- la méthode de surveillance comprend, en outre, une étape de détermination, à partir de ladite image et dudit contenu, d'une séquence d'évènements survenant au cours d'une procédure d'encaissement et une étape de génération d'un message lorsque la séquence d'évènements s'écarte d'une séquence prédéfinie d'évènements.

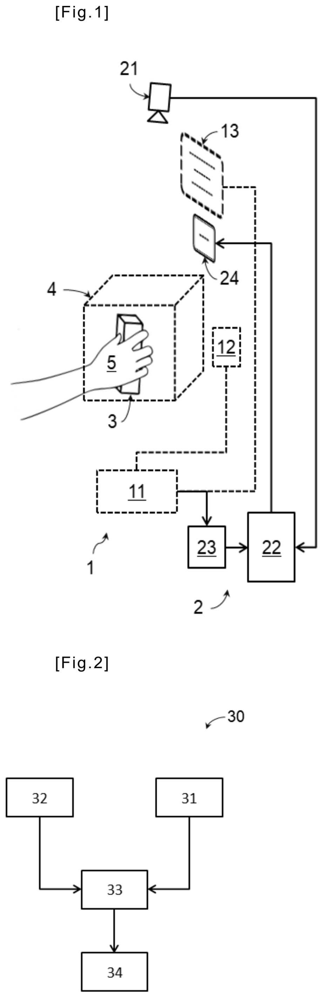

D'autres caractéristiques et avantages de l'invention apparaîtront plus clairement et de manière concrète à la lecture de la description ci-après de modes de réalisation, laquelle est faite en référence aux dessins annexés dans lesquels

la figure [Fig.1] illustre schématiquement une borne d'encaissement automatique équipée d'un système de surveillance selon divers modes de réalisation;

la figure [Fig.2] illustre schématiquement des étapes d'une méthode de surveillance d'une procédure d'encaissement sur une borne d'encaissement automatique selon divers modes de réalisation.

En se référant à la figure 1, il est représenté des éléments d'une borne **1** d'encaissement automatique, notamment une unité centrale **11** apte à exécuter un logiciel d'encaissement ou, plus généralement, un produit programme d'ordinateur dédié à la gestion d'une procédure d'encaissement. Ce logiciel interagit avec une pluralité de périphériques de caisse équipant la borne **1** tels qu'un ou plusieurs lecteurs **12** d'identification d'articles, un dispositif **13** d'affichage, des dispositifs de paiement, une imprimante de tickets de caisse, un haut-parleur, des sémaphores et éventuellement une ou plusieurs balances.

L'unité centrale **11** est un micro-ordinateur disposé à l'intérieur d'un meuble de la borne **1** d'encaissement automatique, un serveur distant ou, de manière plus générale, une carte-mère pourvue d'un processeur, d'une mémoire et d'interfaces appropriées pour assurer son fonctionnement et ses interactions avec divers périphériques de caisse.

Le lecteur **12** d'identification d'articles permet, lors de la présentation d'un article **3** dans un espace **4** prédéfini, d'identifier ce dernier s'il est muni d'éléments d'identification adaptés, tels qu'un code à barres (à une dimension ou à deux dimensions tel qu'un code matriciel ou un code à réponse rapide plus connu sous le nom anglais QR code) ou une puce d'identification par radiofréquence. Ce lecteur **12** d'identification d'articles peut être, par exemple, un lecteur optique tel qu'un lecteur de codes à barres (communément appelés « scanners»), ou encore un lecteur d'identification par radiofréquence tel qu'un lecteur RFID. L'espace **4** de présentation correspond à une zone ou un volume spatial destiné à recevoir un article **3** à enregistrer par la borne **1** d'encaissement automatique. Cet espace **4** se situe dans le champ d'action ou dans la portée du lecteur **12** d'identification d'articles.

Le dispositif **13** d'affichage est toute interface utilisateur, interactive ou non, utilisée par la borne 1 d'encaissement automatique pour présenter des informations à l'utilisateur tout au long de la procédure d'encaissement. A titre d'exemples non exhaustifs, ces informations peuvent inclure une indication sur l'étape en cours de la procédure d'encaissement, des informations associées à un identifiant lu par le lecteur **12** d'identification d'articles (tel qu'une désignation, un label, un nom ou une description de l'article 3 facilitant son identification sur un ticket de caisse, une référence produit, un numéro de série, une quantité, un poids, un prix, une réduction appliquée et/ou un logo associé), un montant à payer, des options de paiement, des instructions à suivre, des confirmations d'opérations, des messages contextuels (tels qu'un message d'accueil, un message d'au revoir, un message d'assistance en cas d'erreur ou de besoin d'aide, ou des info-bulles).

Plus généralement, toute information contribuant à améliorer l'ergonomie et l'accessibilité de la borne **1** d'encaissement automatique, en rendant l'expérience utilisateur fluide et intuitive, peut être affichée via le dispositif **13** d'affichage. Ce dispositif **13** d'affichage est, par exemple, un écran tactile, un écran non tactile, ou un afficheur-client.

En particulier, dans un souci de transparente et de confiance, dès qu'un article **3** est identifié, il est enregistré parmi les articles à encaisser et l'utilisateur en est informé par l'affichage d'informations prédéfinies relatives à cet article **3** par le dispositif d'affichage. Un article **3** peut être identifié au moyen du lecteur **12** d'identification d'articles ou via une saisie ou une sélection manuelle d'un identifiant via un périphérique d'entrée de la borne **1** d'encaissement automatique (comme un clavier, une sourie, ou un écran tactile).

Plus généralement, le dispositif **13** d'affichage est configuré pour afficher une information relative à un article **3** à encaisser. L'utilisateur peut, ainsi, suivre en temps réel la liste des articles à encaisser. Dans certains modes de réalisation, l'enregistrement d'un article **3** identifié est soumis à une vérification du poids de cet article **3** par rapport à un poids attendu qui lui est associé. Un poids de l'article **3** peut être déterminé lorsque ce dernier est récupéré depuis ou déposé dans un bac de la borne **1** d'encaissement automatique intégrant une balance électronique.

Le dispositif **13** d'affichage reçoit de l'unité centrale **11** des signaux d'affichage numériques ou analogiques contenant des informations à afficher. Ces signaux représentent des données graphiques et/ou textuelles généralement organisées en images (ou trames) correspondant à l'affichage plein écran. Les signaux d'affichage représentent, à titre d'exemples non exhaustifs, un écran d'accueil et des instructions générales (par exemple, logo et nom du point de vente, boutons pour démarrer une procédure d'encaissement, boutons de sélection de la langue), une visualisation en temps réel du contenu du panier (liste des articles **3** enregistrés ainsi que des informations les concernant, total partiel et total général à payer, boutons pour modifier le panier tel que ajouter/supprimer des articles **3),** un résumé du contenu du panier et confirmation avant paiement, un ou plusieurs choix du mode de paiement, une interface ou des instructions de paiement, un message de remerciement et de fin de transaction ou des messages d'erreur et d'assistance.

Pour cela, le dispositif **13** d'affichage est relié à l'unité centrale **11** via un port adapté. Parmi les ports les plus couramment utilisés figurent le HDMI (pour « High-Definition Multimedia Interface »), le DisplayPort ou Mini DisplayPort, l'USB-C (ou Thunderbolt 3/4), le DVI (pour « Digital Visual Interface »), le VGA (pour « Video Graphics Array »), le SDI (pour « Serial Digital Interface »), ainsi que les ports propriétaires, comme Lightning ou Dock Connectors, spécifiques à certains fabricants. Le choix du port dépend des capacités de l'unité centrale **11** (ou de sa carte graphique), du dispositif **13** d'affichage, des contraintes techniques (telles que la résolution ou la fréquence de rafraichissement) et de la compatibilité matérielle. Cette connexion assure la transmission des signaux d'affichage au dispositif **13** d'affichage.

Lorsqu'il s'agit d'un écran tactile, le dispositif **13** d'affichage interagit avec l'unité centrale **11** en transmettant des informations issues des interactions utilisateur. Par exemple, lorsqu'un utilisateur saisie un identifiant ou sélectionne une option sur l'écran tactile, les données correspondantes sont envoyées en temps réel à l'unité centrale **11,** qui les interprète et ajuste en retour les signaux d'affichage.

Comme il est également représenté sur la figure 1, un système **2** de surveillance destiné à équiper la borne **1** d'encaissement automatique comprend au moins un capteur **21** d'image. Ce capteur **21** d'image est configuré pour acquérir (ou capturer) au moins une image d'un article **3** à encaisser. Le capteur **21** d'image est, par exemple, une caméra 2D ou une caméra 3D (telle qu'une caméra à temps de vol, des caméras stéréoscopiques, ou des caméras à lumière structurée). Avantageusement, une caméra 3D fournie une estimation de forme et/ou le volume de l'objet capté, sans recourir à un traitement multi-vues.

Le capteur **21** d'image permet d'acquérir une image d'un article **3** à encaisser présent dans une zone d'intérêt. Dans un mode de réalisation, cette zone d'intérêt correspond à l'espace **4** de présentation. Autrement dit, lorsqu'un article **3** est introduit dans l'espace **4** de présentation, cet article **3** se trouve au moins partiellement dans la zone d'intérêt du champ de vision du capteur **21** d'image. Par exemple, l'axe optique du capteur **21** d'image passe par l'espace **4** de présentation, lequel se trouve sensiblement au centre de son champ de vision.

Dans un autre mode de réalisation, la zone d'intérêt peut être étendue pour couvrir un espace environnant l'espace **4** de présentation (par exemple, à gauche, à droite et/ou devant celui-ci, là où un article **3** à encaisser peut être présent). Dans ce cas, le capteur **21** d'image permet d'acquérir une image d'un article **3** à encaisser présent à proximité de l'espace **4** de présentation ou dans l'environnement immédiat de la borne **1** d'encaissement automatique. Un article **3** peut, en effet, être positionné près de l'espace **4** de présentation ou de la borne d'encaissement automatique, posé sur le meuble de celle-ci, ou encore placé dans un contenant tel qu'un panier ou un chariot.

Dans un mode de réalisation, la zone d'intérêt est définie en fonction de l'étape en cours dans la procédure d'encaissement. Par exemple, la zone d'intérêt comprend
- l'espace **4** de présentation lors de l'étape d'enregistrement des articles **3,** au cours de laquelle l'utilisateur présente successivement les articles **3** à encaisser à la borne **1** d'encaissement automatique ;
- un espace situé à proximité de l'espace **4** de présentation ou de la borne **1** d'encaissement automatique à la fin de l'étape d'enregistrement, cette transition étant soit indiquée explicitement par l'utilisateur, soit déduite automatiquement, par exemple, au moment du déclenchement de l'étape de paiement.

Bien entendu, le système **2** de surveillance peut comprendre une pluralité de capteurs **21** d'image couvrant chacun au moins partiellement la zone d'intérêt. Une pluralité de capteurs **21** d'image peut être répartie de manière à couvrir au mieux la zone d'intérêt en offrant une vue multi-angulaire.

Dans un mode de réalisation, le capteur **21** d'image est disposé au dessus de l'espace **4** de présentation, de manière visible pour l'utilisateur, tout en évitant de couvrir l'espace face à la borne **1** d'encaissement automatique où l'utilisateur est attendu. Par exemple, le capteur **21** d'image peut être fixé à un mât surplombant l'espace **4** de présentation. Cela permet d'empêcher la capture d'images du visage de l'utilisateur. Ainsi, le système **2** de surveillance agit comme une mesure dissuasive sans porter atteinte aux données personnelles de l'utilisateur. Pour un traitement strict des données, les images acquises sont, dans un mode de réalisation, anonymisées.

Dans un mode de réalisation, le système **2** de surveillance comprend, en outre, un capteur de son, tel qu'un microphone, configuré pour capturer un son prédéfini émis par la borne **1** d'encaissement automatique, notamment un son (ou un bip sonore) indiquant la lecture, par le lecteur **12** d'identification d'articles, d'un identifiant. Le capteur de son est, dans un mode de réalisation, un microphone ou un réseau de microphones directif configuré pour capter un son dans une direction prédéfinie, à une ou plusieurs fréquences prédéfinies et/ou ayant une puissance supérieure à une valeur seuil prédéfinie. Cette configuration permet de détecter un son prédéfini émis par la borne **1** d'encaissement automatique lorsqu'un identifiant est lu par le lecteur **12** d'identification d'articles.

Un module **22** de traitement du système **2** de surveillance est configuré pour déterminer, dans au moins une image (ou dans une pluralité d'images successives) acquise par le capteur **21** d'image, un article **3** candidat correspondant à l'article **3** à encaisser. Pour ce faire, le module **22** de traitement analyse les images acquises et effectue une reconnaissance de l'article **3,** en attribuant un score de confiance à la détermination de l'article candidat.

Une détermination, sur la base d'au moins une image acquise, d'un article candidat correspondant à un article **3** présent dans une zone d'intérêt prédéfinie peut être obtenue par toute méthode connue de l'état de l'art, telle que les méthodes basées sur l'apprentissage automatique profond (dit, en anglais, « deep learning»). Parmi ces méthodes, on cite les réseaux de neurones convolutifs (plus connus sous l'acronyme CNN de l'anglais « Convolutional Neural Networks »), les réseaux de neurones convolutifs basés sur des régions (dit, selon une terminologie anglo-saxonne, R-CNN pour « Region-based Convolutional Neural Networks »), des réseaux de neurones convolutifs basés sur des régions rapides (dit, selon une terminologie anglo-saxonne, Fast R-CNN pour « Fast Region-based Convolutional Neural Networks »), ou des réseaux de neurones convolutifs basés sur des régions plus rapides (Faster RCNN), ou tout autre modèle équivalent.

Dans un mode de réalisation, le module **22** de traitement est configuré pour déterminer au moins un attribut relatif à l'article **3** présent dans une image acquise par le capteur **21** d'image. Un attribut désigne tout paramètre visuel, descripteur, ou caractéristique spécifique (dit, en anglais, « feature ») de l'article **3.** Parmi ces attributs, on peut citer des éléments textuels (un texte présent sur l'article **3,** y compris des mots clés distinctifs, une typographie ou une police de caractère spécifique), des éléments graphiques ( un dessin, un symbole et/ou un logo par exemple), des caractéristiques colorimétriques ( par exemple, une dominance de certaines couleurs ou un histogramme de couleurs), des propriétés de texture et de structure ( par exemple, une texture de surface ou un motif visuel), des paramètres dimensionnels et morphologiques (par exemple, une dimension, une proportion de dimensions, un contour ou une forme générale telle que la forme d'une bouteille, d'une boîte, d'un paquet, d'un pack, d'un sachet, d'un pot, d'un plateau, d'un filet, d'un blister, d'un rouleau, d'un bidon, d'un tube ou d'une barre). Ces attributs peuvent également inclure des éléments sémantiques permettant d'associer certaines caractéristiques visuelles à une signification spécifique, des relations spatiales entre les pixels utilisées pour l'analyse de la structure de l'image, ou des informations de profondeur facilitant l'évaluation du relief et du volume de l'article **3.**

Des attributs sont, dans un mode de réalisation, déterminés au moyen d'une reconnaissance optique de caractères visibles sur l'article **3** (plus connue sous les terminologies anglo-saxonnes "Optical Character Recognition" ou OCR). Une analyse sémantique permet, avantageusement, de corriger ou de compléter une donnée manquante dans un attribut textuel en utilisant par exemple le modèle des N-grammes. L'utilisation d'une pluralité d'attributs permet, avantageusement, d'exploiter des données incomplètes, tel qu'un dessin ou un texte déterminés que partiellement à partir des images acquises.

De préférence, une pluralité d'attributs de l'article **3** sont déterminés de sorte à former un vecteur d'attributs. Le ou les attributs déterminés est/sont fourni(s) en entrée d'une méthode de reconnaissance apte à estimer, avec un coefficient, un score ou un indice de confiance, un article candidat correspondant à l'article **3.** Plus le nombre d'attributs est élevé, plus important est le score de confiance. La méthode de reconnaissance (des modèles de type CNN, R-CNN, Fast R-CNN, Faster R-CNN, ou équivalents) est, dans un mode de réalisation, basée sur un apprentissage automatique entraîné avec des images précédemment capturées de l'article **3.** En outre, afin de faciliter la détection de l'article **3** dans la zone d'intérêt, le capteur **21** d'image est, de préférence, orienté de façon à avoir un arrière-plan sensiblement statique.

Avantageusement, le module **22** de traitement utilise, pour déterminer un article candidat, au moins un attribut parmi une liste d'attributs de l'article **3** ne comprenant pas l'identifiant à lire par le lecteur **12** d'identification d'articles. Autrement dit, pour déterminer un article candidat correspondant à l'article **3,** le module **22** de traitement se base sur un ou plusieurs attributs autres que ceux exploités par le lecteur **12** d'identification d'articles.

Dans un mode de réalisation, le module **22** de traitement utilise, pour déterminer un article candidat correspondant à l'article **3,** un ou plusieurs attributs différents d'un code à barres unidimensionnel ou bidimensionnel, notamment lorsque le lecteur **12** d'identification d'articles est un lecteur optique (un scanner). En revanche, lorsque le lecteur **12** d'identification d'articles est un lecteur RFID, un code à barres peut figurer parmi les attributs à utiliser pour reconnaitre l'article **3.** Plus généralement, le module **22** de traitement et le lecteur **12** d'identification d'articles se réfèrent à des attributs différents pour identifier l'article **3** à encaisser afin d'améliorer la robustesse du système **2** de surveillance.

Par ailleurs, le système **2** de surveillance comprend un dispositif **23** de capture configuré pour récupérer en temps réel des signaux d'affichage destinés au dispositif **13** d'affichage et convertir ces signaux en un contenu au format prédéfini. Le dispositif **23** de capture réalise une capture instantanée des signaux d'affichage envoyés par l'unité centrale **11** au dispositif **13** d'affichage. Par « temps réel » ou « instantanée », on entend ici une capture des signaux d'affichage au moment même où ils sont envoyés au dispositif **13** d'affichage, avec un délai quasi nul. Il en résulte une récupération fidèle des signaux affichés par le dispositif **13** d'affichage.

Plus généralement, les signaux d'affichage récupérés par le dispositif **23** de capture représentent les images affichées visuellement par le dispositif **13** d'affichage ou une copie de ce qui affiché par le dispositif **13** d'affichage.

Le dispositif **23** de capture comprend, par exemple, une carte de capture ou une carte d'acquisition des signaux d'affichage, telle qu'une carte de capture HDMI. Dans un mode de réalisation, le dispositif **23** de capture est équipé d'un port d'entrée destiné à être connecté à un port de sortie de l'unité centrale **11** sur lequel une copie des signaux d'affichage envoyés au dispositif **13** d'affichage peut être récupérée. Le port d'entrée est par exemple un port d'entrée HDMI (HDMI IN), un port d'entrée USB-C (USB-C IN), un port d'entrée DisplayPort, un port d'entrée DVI, un port d'entrée VGA, ou un port d'entrée SDI.

Dans un autre mode de réalisation, le dispositif **23** de capture comprend un répartiteur permettant de dupliquer les signaux d'affichage destinés au dispositif d'affichage. Ce répartiteur comprend au moins deux sorties et peut être, par exemple, un répartiteur HDMI, plus connu sous le nom anglais « HDMI splitter ». Le répartiteur intercepte et duplique, sans modification, les signaux d'affichage simultanément vers le dispositif **13** d'affichage et le dispositif **23** de capture. Dans un mode de réalisation, le répartiteur permet, le cas échéant, de décoder les signaux d'affichage lorsqu'ils sont encodés ou protégés.

Dans un autre mode de réalisation, le dispositif **23** de capture est configuré pour intercepter, traiter et retransmettre les signaux d'affichage vers le dispositif **13** d'affichage. Concrètement, le dispositif **23** de capture peut être placé entre l'unité centrale **11** et le dispositif **13** d'affichage, lui permettant de capturer en temps réel les signaux d'affichage avant qu'ils n'atteignent le dispositif **13** d'affichage. Une fois interceptés, ces signaux peuvent être traités en temps réel, avant d'être renvoyés sans altération et sans latence perceptible au dispositif **13** d'affichage.

Le dispositif **23** de capture convertit (ou transforme) les signaux d'affichage récupérés en images (ou trames), en contenu vidéo ou, plus généralement, en un contenu au format prédéfini permettant son analyse par le module **22** de traitement. Cette conversion permet d'obtenir les images affichées par le dispositif **13** d'affichage.

Le module **22** de traitement permet d'analyser le contenu des signaux d'affichage à diverses fins, telles que
- l'amélioration de l'expérience utilisateur en observant l'utilisation du logiciel d'encaissement afin d'optimiser son ergonomie (analyse de la durée totale, du temps passé sur chaque étape de la procédure d'encaissement, des interactions et des scénarios, ainsi que du suivi de la procédure d'encaissement);
- la formation en enregistrant des sessions d'encaissement pour créer des tutoriels et faciliter la prise en main du logiciel d'encaissement; et/ou
- la surveillance en temps réel de la procédure d'encaissement.

Des outils de vision par ordinateur et d'intelligence artificielle peuvent être utilisés pour analyser et interpréter automatiquement le contenu des signaux d'affichage, tels que des logiciels de reconnaissance optique de caractères (OCR) ou de reconnaissance de formes ou d'objets connus de l'état de la technique.

Une étape d'apprentissage automatique profond préalable des différentes étapes et pages du logiciel d'encaissement, ainsi qu'une base de données intégrant des informations concernant les articles **3** proposés à la vente permet avantageusement d'extraire et de reconnaitre le contenu des images véhiculées par les signaux d'affichages.

Pour une surveillance de la procédure d'encaissement, le module **22** de traitement est, dans un mode de réalisation, configuré pour vérifier la présence ou l'absence, dans le contenu des signaux d'affichage, d'une information relative à l'article candidat déterminé à partir d'au moins une image acquise par le capteur **21** d'image. Cette recherche vise à s'assurer de la correspondance entre l'article candidat et l'article **3 à** encaisser ou, le cas échéant, à s'assurer de la présence de l'article candidat parmi les articles enregistrés. Cette recherche est, de préférence, effectuée en temps réel, autrement dit le temps que le dispositif **13** d'affichage affiche l'article **3** venant d'être enregistré ou, plus généralement, au cours de la procédure d'encaissement (notamment, avant sa clôture). Une information relative à l'article candidat peut inclure, seule ou en combinaison, une désignation, un label, une marque, une description, une référence produit, un numéro de série, un poids, un volume, un prix, un logo, un objet graphique, un code, ou, plus généralement, toute information permettant d'identifier cet article sur un ticket de caisse ou sur une facture.

Une absence d'information relative à l'article candidat dans le contenu des signaux d'affichage peut être considérée par le système **2** de surveillance comme une non-correspondance entre l'identifiant lu par le lecteur **12** d'identification d'articles et l'article **3** enregistré, notamment en raison de
- une modification suspecte de l'identifiant de l'article **3,** telle qu'un changement du code à barres ou de la puce RFID de l'article **3,** ou une lecture de l'identifiant d'un élément d'un pack au lieu d'une lecture de l'identifiant du pack (notamment, une lecture du mauvais code à barres) ;
- un enregistrement manuel incorrect de l'article **3,** telle qu'une sélection ou une saisie incorrecte de identifiant de l'article **3** par le client ou par le personnel de caisse (par exemple, dans le cas d'un article ne comportant pas d'identifiant, comme un produit alimentaire frais);
- une erreur d'étiquetage, qu'elle soit intentionnelle ou non, par exemple dans le cas d'un produit en vrac (tel que des fruits et légumes, ou un produit en libre-service avec emballage personnalisé ou des produits frais en vrac) pesé et étiqueté par le client.

Une absence d'information relative à l'article candidat dans le contenu des signaux d'affichage peut également être considérée par le système **2** de surveillance comme une absence de présentation (non-scan) de l'article **3** à la borne **1** d'encaissement automatique en raison notamment
- d'un oubli, intentionnel ou non, d'enregistrer cet article **3** et passage à l'étape de payement ( par exemple, un article **3** laissé dans ou sous le chariot ou à proximité de la borne **1** d'encaissement automatique ou sur le meuble de celle-ci); ou
- d'une présentation suspecte de l'article **3** en adoptant une posture de préhension de l'article **3** empêchant la lecture de son identifiant par le lecteur **12** d'identification d'articles (par exemple, masquer le code à barres avec la main **5** de l'utilisateur ou orienter l'article **3** de façon à cacher son identifiant au lecteur **12** d'identification d'article).

Lorsque l'article **3** se trouve dans une zone d'intérêt couvrant l'environnement de la borne **1** d'encaissement automatique, le module **22** de traitement permet, avantageusement, de détecter l'absence de présentation (ou le non-scan) de cet article **3** à la borne **1** d'encaissement automatique lorsqu'aucune information le concernant ne figure dans le contenu des signaux d'affichage transmis au dispositif **13** d'affichage. Cependant, un article **3** présent dans l'environnement de la borne **1** d'encaissement automatique (par exemple, dans un chariot ou un panier) peut être considéré comme présenté et correctement pris en compte s'il est vérifié la présence (en quantité correspondante), dans le contenu des signaux d'affichage, d'une information relative à l'article candidat qui lui est associé. C'est notamment le cas, par exemple, d'un article **3** muni d'une étiquette détachable, permettant son enregistrement sans manipulation directe de l'article **3** (par exemple, un pack d'eau ou, plus généralement, un article volumineux ou encombrant).

Dans un mode de réalisation, une présentation suspecte d'un article **3** au lecteur **12** d'identification d'articles peut être détectée par l'absence, au moment de cette présentation, de la capture d'un son prédéfini par le capteur de son. Autrement dit, la détermination d'un article candidat correspondant à un article introduit dans l'espace **4** de présentation sans la capture d'un son confirmant la lecture d'un identifiant par le lecteur **12** d'identification d'articles est interprété par le module **22** de traitement comme une présentation suspecte de l'article **3.** La capture du son prédéfini permet ainsi de confirmer qu'un article **3** a été correctement présenté. La correspondance entre l'identifiant lu et l'article **3** présenté peut être confirmée en vérifiant la présence, dans le contenu des signaux d'affichage, d'une information relative à l'article candidat correspondant à cet article **3.**

Lorsqu'un document portant un identifiant, qu'il soit physique ou dématérialisé, tel qu'une carte de fidélité, une carte-cadeau, un coupon de réduction, un bon d'achat ou une étiquette détachable, est présenté au lecteur **12** d'identification d'articles, un article candidat générique peut lui être associé. Une analyse du contenu des signaux d'affichage permet de préciser l'article candidat générique.

Par ailleurs, une analyse en temps réel du contenu des signaux d'affichage permet, avantageusement, de détecter une procédure d'encaissement inachevée, notamment dans les cas où un client quitte la borne **1** d'encaissement automatique sans avoir finalisé son paiement. Cette détection permet d'identifier les situations où un ou plusieurs articles 3 ont été enregistrés mais non payés, que ce soit de manière involontaire (oubli, problème technique) ou intentionnelle (tentative de fraude).

La présence, dans le contenu des signaux d'affichage, d'une information relative à l'article candidat permet de valider l'exactitude de l'identifiant détecté par le lecteur **12** d'identification d'article. Cela garantit également que chaque article candidat, déterminé à partir des images acquises, figure bien dans la liste des articles à encaisser. Il en résulte avantageusement une surveillance accrue de la procédure d'encaissement permettant de prévenir les vols et les tentatives de fraude.

Dans un mode de réalisation, le module **22** de traitement est configuré pour extraire un texte du contenu des signaux d'affichage. Pour cela, le module **22** de traitement comprend, dans un mode de réalisation, un logiciel de reconnaissance optique de caractères (OCR) permettant de détecter et d'extraire un texte dans une image ou une dans une vidéo véhiculée par les signaux d'affichage. Le texte extrait comprend, lors de l'enregistrement successif des articles **3** à en encaisser, notamment des informations associés aux identifiants lus par le lecteur **12** d'identification d'articles. La présence ou l'absence d'une information relative à l'article candidat est vérifiée dans le texte extrait. Des modèles d'intelligence artificielle, des expressions régulières et/ou des algorithmes de logique floue peuvent être utilisés pour effectuer une telle vérification. Avantageusement, cette vérification permet de réduire la latence du système **2** de surveillance (réduire le décalage temporel entre le résultat de la vérification et l'affichage du texte extrait par le dispositif **13** d'affichage).

Dans un autre mode de réalisation, le module **22 de** traitement est configuré pour vérifier la présence ou l'absence d'une information relative à l'article candidat dans une partie du contenu des signaux d'affichage. Cette partie est, dans un mode de réalisation, la partie nouvelle du continue, c'est-à-dire les changements ou les ajouts récents (autrement dit, les éléments qui ont changé entre deux images successives). Cette partie nouvelle peut être obtenue par diverses méthodes telles qu'une soustraction d'image, une modélisation des éléments statiques (comme les boutons, les titres, les icônes ou les barres de navigation de l'interface graphique du logiciel d'encaissement), une utilisation de réseaux neuronaux pour la détection de nouveaux objets dans le contenu, une extraction des régions d'intérêt dans l'interface graphique du logiciel d'encaissement, une sélection d'images clés à intervalles réguliers ou en fonction de l'étape en cours de la procédure d'encaissement, ou encore une combinaison de ces techniques.

Avantageusement, vérifier la présence ou l'absence d'une information relative à l'article candidat dans une partie spécifique du contenu des signaux d'affichage (plutôt que dans l'intégralité du contenu) permet de maximiser l'efficacité du module **22** de traitement tout en réduisant la latence pour une analyse en temps réel (sans délai perceptible par l'utilisateur) fluide et précise.

Le module **22** de traitement est configuré pour générer une alerte ou, plus généralement, un message et/ou pour activer un contrôle supplémentaire, en cas d'absence d'une information relative à l'article candidat dans le contenu des signaux d'affichage. Un message peut être destiné à l'utilisateur de la borne **1** d'encaissement automatique ou à un membre du personnel de caisse. Dans un mode de réalisation, le message généré par le module **22** de traitement est affiché sur un écran **24** et/ou signalé via un sémaphore ou un haut-parleur pour assister l'utilisateur, l'inviter à scanner à nouveau l'article **3** concerné, ou lui demander de confirmer que tous les articles à encaisser ont été enregistrés.

Dans un mode de réalisation, le module **22** de traitement comprend une fonctionnalité de génération de rapports d'erreurs et d'analyse des tendances. Ces rapports permettent d'identifier les problèmes récurrents et de proposer des améliorations pour réduire la démarque inconnue et les erreurs involontaires d'encaissement. Le module **22** de traitement peut être conçu pour être interactif, permettant au personnel de caisse de fournir des retours d'information sur les messages générés. Ces retours pourraient être utilisés pour affiner les messages et améliorer l'expérience utilisateur globale.

Lorsqu'un écran **24** est utilisé pour afficher les messages du module **22** de traitement, cet écran **24** peut également être utilisé pour afficher des messages promotionnels liés à l'un quelconque des articles candidats déterminés par ce module **22** de traitement.

Dans un autre mode de réalisation, le module **22** de traitement est configuré pour déterminer, à partir des images acquises par le capteur **21** d'image et du contenu des signaux d'affichage, une séquence d'évènements survenant au cours de la procédure d'encaissement. Cette séquence constitue une sorte de narration, ou « story », détaillant l'ensemble du processus d'encaissement de manière chronologique, que ce soit sous forme d'images, de texte ou d'une combinaison des deux. Un évènement d'encaissement désigne toute action pouvant être détectée à partir des images acquises (par exemple, « présentation d'un article à l'enregistrement », « détermination d'un article candidat » ou « échec de la détermination d'un article candidat »), notamment lors de la détermination d'un article candidat, ou impliquant une modification dans le contenu des signaux d'affichage (par exemple, « lancement d'une procédure d'encaissement », « lecture d'un identifiant », « retrait d'un article », « validation d'un panier », « sélection d'un mode de paiement », « validation d'un paiement », « paiement refusé », « message d'au revoir »). Ces évènements sont, dans un mode de réalisation, sélectionnés parmi une liste prédéfinie d'évènements. Le module **22** de traitement est configuré pour générer une alerte ou, plus généralement, un message lorsque la séquence d'évènements s'écarte d'une séquence prédéfinie d'évènements. Le module **22** de traitement suit l'enchaînement des évènements survenus et génère un message d'alerte (sonore et/ou visuelle) dès qu'un écart par rapport à un scénario prédéfini est détecté (telle qu'une procédure d'encaissement inachevée, un échec répété de reconnaissance d'un article **3,** un échec successif de lecture de l'identifiant d'un article **3,** ou l'ajout e la suppression répétés d'un même article **3).**

Ainsi, le système **2** de surveillance permet avantageusement de surveiller en temps réel la procédure d'encaissement, de détecter toute éventuelle anomalie et de s'assurer que son déroulement suit un des scenarios prédéfinis, sans omission ni erreur d'enregistrement des articles **3.** Le module **22** de traitement peut également générer des rapports détaillés sur les anomalies détectées, fournissant des analyses précieuses pour optimiser la procédure d'encaissement.

En se reportant à la figure 2, il est affiché des étapes d'une méthode **30** de surveillance d'une procédure (ou d'une session) d'encaissement sur la borne 1 d'encaissement automatique.

Tel qu'il est décrit ci-dessus, cette méthode **30** comprend une étape de récupération **31** en temps réel au moyen du dispositif **23** de capture des signaux d'affichage destinés au dispositif **13** d'affichage et de conversion de ces signaux en un contenu au format prédéfini (par exemple, un contenu vidéo, des images ou de trames).

La récupération de ces signaux est, dans un mode de réalisation, réalisée à l'aide d'une carte d'acquisition pourvu d'un port d'entrée compatible avec un deuxième port de sortie de signaux d'affichage disponible sur l'unité centrale 11. En alternative, le dispositif **23** de capture comprend une carte de capture (de type HDMI par exemple) pourvue d'un répartiteur permettant de dupliquer les signaux d'affichage envoyés par l'unité centrale **11** au dispositif **13** d'affichage.

La méthode **30** de surveillance comprend, en outre, une étape d'acquisition **32** au moyen du capteur **21** d'image d'un article 3 à encaisser et de détermination, au moins à partir de cette image, un article candidat correspondant à l'article 3 à encaisser. L'acquisition d'images par le capteur **21** d'image est, dans un mode de réalisation, déclenchée par la détection d'un lancement de la procédure d'encaissement en analysant le contenu des signaux d'affichage. L'acquisition d'image peut être suspendue ou arrêtée à la clôture d'une procédure d'encaissement.

La détermination, au moins à partir d'une image acquise par le capteur **21** d'image couvrant une zone d'intérêt (notamment, l'espace **4** de présentation ou au moins partiellement l'environnement de la borne **1** d'encaissement automatique), d'un article **3** candidat correspondant à l'article **3** permet une reconnaissance de ce dernier, avec un indice de confiance. Cette reconnaissance se base sur des attributs (ou marqueurs) visuels autre que celui utilisé par le lecteur **12** d'identification d'articles lorsqu'il est un lecteur optique (de type un scanner de code à barres). L'environnement de la borne 1 d'encaissement automatique peut inclure l'espace **4** de présentation des articles **3,** le meuble ou la structure de la borne **1,** l'aire de dépôt des articles **3** déjà enregistrés ou à enregistrer, l'espace de pesée (si présent), l'espace immédiat autour de la borne **1** pouvant recevoir des articles **3** à encaisser ou un chariot ou un panier comprenant des articles **3** à encaisser. Plus généralement, l'environnement de la borne **1** d'encaissement automatique peut inclure les zones où le client interagit avec la borne **1** et ses articles **3** à encaisser.

En exploitant, d'une part, l'article **3** candidat déterminé et, d'autre part, le contenu des signaux d'affichage, la méthode **30** de surveillance comprend une étape de vérification **33** de la présence ou de l'absence dans ce contenu d'une information relative à l'article candidat. Avantageusement, cette étape de vérification **33** permet de s'assurer que l'article **3** candidat et l'identifiant lu par le lecteur **12** d'identification d'articles correspondent bien au même article **3.** Autrement dit, cette étape de vérification **33** permet de s'assurer de la concordance entre les informations déterminées à partir des images acquises et celles déterminées par le lecteur **12** d'identification d'articles. Cette vérification permet également de déterminer si un article **3** à encaisser, présent dans l'environnement de la borne **1** d'encaissement automatique, a été enregistré ou non (qu'il soit présenté sans avoir été enregistré, ou encore non présenté du tout).

Dans un mode de réalisation, la méthode **30** de surveillance comprend une étape d'extraction d'un texte du contenu des signaux d'affichage, la présence ou l'absence de ladite information étant vérifiée dans le texte extrait.

Par ailleurs, la méthode **30** de surveillance peut également comprend une étape de détermination, à partir d'au moins une image acquise par le capteur **21** d'image et du contenu des signaux d'affichage, d'une séquence d'évènements survenant au cours d'une procédure d'encaissement et une étape de génération d'un message lorsque la séquence d'évènements s'écarte d'une séquence prédéfinie d'évènements.

Une observation conjointe et corrélée de l'environnement de la borne **1** d'encaissement automatique au moyen du capteur **21** d'image (éventuellement, en combinaison avec un capteur de son) et du contenu des signaux d'affichage au moyen du dispositif **23** de capture permet, de façon avantageuse, la détection d'un article **3** non enregistré (présenté sans avoir été enregistré, ou non présenté du tout); d'une erreur d'enregistrement d'un article **3,** ainsi que du non-achèvement d'une procédure d'encaissement.

Avantageusement, les modes de réalisation présentés ci-dessus sont particulièrement adaptés à la lutte contre le vol, la réduction de la démarque inconnue et la correction des erreurs involontaires dans les bornes d'encaissement automatique. Ils assurent une protection discrète et efficace sans perturber l'expérience utilisateur ni impacter les logiciels d'encaissement en place. Ils peuvent être déployés en complément des infrastructures existantes, offrant ainsi aux points de vente une solution flexible et évolutive pour optimiser la sécurité et la fiabilité des transactions. En alternative, le système **2** de surveillance peut faire partie intégrante de la borne **1** d'encaissement.

Il convient de noter qu'il n'est pas nécessaire que la borne **1** d'encaissement dans les divers modes de réalisation présentés ci-dessus soit automatique au sens strict du terme (c'est-à-dire fonctionnant comme une caisse en libre-service ou, en anglais, « self-checkout »). En effet, cette borne **1** peut, de manière plus générale, être tout type de système d'encaissement, y compris une borne d'encaissement standard traditionnelle. Dans ce cas, l'utilisateur de la borne **1** d'encaissement n'est pas nécessairement le client, mais peut être un membre du personnel du point de vente.

## Revendications

1. Système **(2)** de surveillance destiné à équiper une borne **(1)** d'encaissement intégrant un dispositif **(13)** d'affichage configuré pour afficher une information relative à un article **(3)** à encaisser, ce système **(2)** comprenant
- un capteur **(21)** d'image configuré pour acquérir une image dudit article **(3);**
- un module **(22)** de traitement configuré pour déterminer, dans ladite image, un article candidat correspondant audit article **(3)** à encaisser;
ce système **(2)** étant **caractérisé en ce qu'il** comprend, en outre,
- un dispositif **(23)** de capture configuré pour récupérer en temps réel des signaux d'affichage destinés au dispositif **(13)** d'affichage et convertir ces signaux en un contenu au format prédéfini ;
le module (22) de traitement étant, en outre, configuré pour vérifier la présence ou l'absence, dans ledit contenu, d'une information relative à l'article candidat.

2. Système **(2)** de surveillance selon la revendication précédente, **caractérisé en ce que** le dispositif **(23)** de capture comprend un répartiteur permettant de dupliquer les signaux d'affichage destinés au dispositif **(13)** d'affichage.

3. Système **(2)** de surveillance selon la revendication 1 ou 2, **caractérisé en ce que** le module **(22)** de traitement est configuré pour vérifier la présence ou l'absence d'une information relative à l'article candidat dans une partie dudit contenu.

4. Système **(2)** de surveillance selon l'une quelconque des revendications précédentes, **caractérisé en ce que** le module **(22)** de traitement est, en outre, configuré pour extraire un texte dudit contenu, la présence ou l'absence de ladite information étant vérifiée dans le texte extrait.

5. Système **(2)** de surveillance selon l'une quelconque des revendications précédentes, **caractérisé en ce que** le module **(22)** de traitement utilise, pour déterminer l'article candidat, un ou plusieurs attributs de l'article **(3)** différents d'un code à barres.

6. Système **(2)** de surveillance selon l'une quelconque des revendications précédentes, **caractérisé en ce qu'il** comprend, en outre, un capteur de son configuré pour capturer un son prédéfini émis par la borne d'encaissement.

7. Système **(2)** de surveillance selon l'une quelconque des revendications précédentes, **caractérisé en ce que** le module **(22)** de traitement est, en outre, configuré pour déterminer, à partir de ladite image et dudit contenu, une séquence d'évènements survenant au cours d'une procédure d'encaissement et pour générer un message lorsque ladite séquence d'évènements s'écarte d'une séquence prédéfinie d'évènements.

8. Méthode **(30)** de surveillance d'une procédure d'encaissement sur une borne **(1)** d'encaissement intégrant un dispositif **(13)** d'affichage configuré pour afficher une information relative à un article **(3)** à encaisser, cette méthode comprenant les étapes suivantes
- acquisition **(32)** au moyen d'un capteur **(21)** d'image d'une image dudit article **(3)** ;
- détermination, au moins à partir de l'image acquise, d'un article candidat correspondant audit article à encaisser;
cette méthode étant **caractérisée en ce qu'elle** comprend, en outre,
- une étape de récupération **(31)** en temps réel au moyen d'un dispositif de capture des signaux d'affichage destinés au dispositif **(13)** d'affichage et de conversion de ces signaux en un contenu au format prédéfini ;
- une étape de vérification **(33)** de la présence ou de l'absence dans ledit contenu d'une information relative à l'article candidat.

9. Méthode **(30)** selon la revendication précédente, **caractérisée en ce qu'**elle comprend, en outre, une étape d'extraction d'un texte du contenu des signaux d'affichage, la présence ou l'absence de ladite information étant vérifiée dans le texte extrait.

10. Méthode **(30)** selon la revendication 8 ou 9, **caractérisée en ce qu'**elle comprend, en outre, une étape de détermination, à partir de ladite image et dudit contenu, d'une séquence d'évènements survenant au cours d'une procédure d'encaissement et une étape de génération d'un message lorsque la séquence d'évènements s'écarte d'une séquence prédéfinie d'évènements.
